# EUROPEAN PATENT APPLICATION

(11) **EP 2 034 790 A1**
(43) Date of publication of application: **11.03.2009**
(21) Application number: 07013407.7
(22) Date of filing: 09.07.2007
(51) Int. Cl.: H04W 72/04

(54) **Method and device for flow management and communication system comprising such device**

(71) Applicant: Nokia Siemens Networks Oy, 02610 Espoo (FI)
(72) Inventor: Görg, Carmelita Prof., 28357 Bremen (DE); Pittmann, Frank, 12099 Berlin (DE); Toseef, Umar, 28201 Bremen (DE); Udugama, Asanga, 28357 Bremen (DE)
(74) Representative: Bruglachner, Thomas E.

(57) **Abstract**

A method and a device for flow management are provided comprising the steps of (i) a network element receives data via at least one access network; (ii) the network element moves to the area of a further access network; and (iii) a handover is performed providing a portion of data to the network element through the further access network, wherein another portion of data is still received via the at least one access network.

## Description

The invention relates to a method and to a device for flow management and to a communication system comprising such a device.

Document IEEE 802.21 (Media Independent Handover MIH) relates to handover optimization between heterogeneous accesses by providing link layer intelligence and network information to upper layers (so called MIH Users).

Mobile terminals with the ability to access networks as specified in IEEE 802.3, 802.11, 802.16 as well as cellular 3GPP/3GPP2 networks in various combinations are driving the need for seamless service continuity and IP address continuity when moving between these networks.

The goal of IEEE 802.21 is to facilitate mobility management (MM) protocols by optimizing the handover process in terms of reducing the handover delay and packet loss in the mentioned heterogeneous access network environment.

IEEE 802.21 suggests a MIH communication also between network entities (NEs) and mobile terminals (User Equipment UE). Such network environment is also considered in currently ongoing 3GPP SAE/LTE (Systems Architecture Evolution / Long Term Evolution) standardization activity.

SAE specifies mobility between 3GPP and non 3GPP networks realized with IETF MM protocols like, e.g., Mobile IP (MIP).

Limitations in the art refer to the fact that the potential candidates of Mobility Management protocols like Mobile IPv6 only allow maintenance of single Points of Attachment (PoAs) at any given time and binding all traffic to this particular single PoA. Hence, the handover process switches all traffic to a newly established PoA.

However, it is disadvantageous to switch the whole traffic between network PoAs only.

The **problem** to be solved is overcome the disadvantages as stated before and to provide an approach that allows to advantageously increase a granularity of the traffic conveyed.

This problem is solved according to the features of the independent claims. Further embodiments result from the depending claims.

In order to overcome this problem, a method for flow management is provided comprising the following steps:
- a network element receives data via at least one access network;
- the network element moves to the area of a further access network;
- a handover is performed providing a portion of data to the network element through the further access network, wherein another portion of data is still received via the at least one access network.

The network element receives data via at least one access network, in particular from another network element that may be part or beyond said at least one access network. The network element in particular changes its location so that it can be reached via a further access network. This further access network may be of a different type compared to the at least one access network. A handover is performed such that a portion of the data conveyed to the network element is sent via the at least one access network, whereas another portion of the data received by the network element is sent through the further access network.

This allows the overall traffic to be routed dynamically via different access networks in case a network element changes from one access network to another.

It is to be noted that a handover may comprise in particular a change of the access network, i.e. the network element changes its access network from one to another. In particular, it may change a cell and/or a type of access network. It is further noted that different access networks may be of one type of access network (e.g., different cells of a particular access network).

According to this approach, multiple simultaneous Points of Attachment (PoAs) can be maintained and switching of all traffic between network PoAs can be enhanced to switching of certain (IP) flows between individual network PoAs, hence, the granularity of traffic will be finer.

This approach further suggests to extend IEEE 802.21 in order to support efficient flow management (FM) as set forth herein. Such extended version may in particular be used for integrated mobility and flow management that supports network control and network initiation.

In an embodiment, the network element is a mobile network element, in particular a user equipment UE.

Preferably, the network element that is subject to a handover may be a mobile network element of various kind.

In another embodiment, the handover is initiated by the first network element.

In a further embodiment, the flow management is associated with a 3GPP network.

Hence, the method described herein at least partially applies to a 3GPP network and/or a combination of communication networks that comprise at least one 3GPP network.

In a next embodiment, the at least one access network and/or the further access network is/are either a 3GPP access network or a non-3GPP access network.

It is also an embodiment that the data is distributed among the at least one access network and the further access network. Such distribution may be done according to preferences that are in particular set forth by a user and/or by an operator.

Pursuant to another embodiment, a Media Independent Command Service is extended by at least one media independent handover command.

According to an embodiment, the network element is extended by a mobility management and flow management client.

The problem stated above is also solved by a device for flow management comprising a processor unit that is arranged and/or equipped such that the method as described herein is executable on said processor.

According to an embodiment, said device is a communication device, in particular a network element.

According to another embodiment the device is a mobile network element, in particular a user equipment.

In yet another embodiment, the mobile network element comprises a flow manager.

Further, the problem stated above is solved by a communication system comprising the device as described herein.

Embodiments of the invention are shown and illustrated in the following figures:
- Fig.1: shows a scenario comprising a UMTS access network, a WLAN, the Internet, all connected via gateways with a Mobile Network Operator's Evolved Packet Core (EPC) network, further illustrating a data flow from a Correspondent Node within the Internet to a mobile terminal (user equipment) connected with a node B of the UMTS network;
- Fig.2: shows the scenario according to Fig.1, wherein the mobile terminal performs a handover from the UMTS network to the WLAN;
- Fig.3: shows the scenario according to Fig.2, wherein the mobile terminal performs a handover to the WLAN, but a portion of the traffic conveyed to the mobile terminal still is sent via the UMTS network;
- Fig.4: shows a proposal as how to extend a Media Independent Handover framework by implementing in particular a flow management client onto the mobile terminal and a flow management agent onto the network entity;
- Fig.5: shows a message chart illustrating message flows between a user equipment and a network element, wherein the user equipment comprises a Mobility Management /Flow Management client and the network element comprises a Mobility Management / Flow Management agent;
- Fig.6: shows a message chart illustrating message flows between a user equipment and a network element, wherein the user equipment comprises a Mobility Management /Flow Management agent and client;
- Fig.7: shows a message chart according to Fig.6 with a merged message "MIH_FM_Register&Rules".

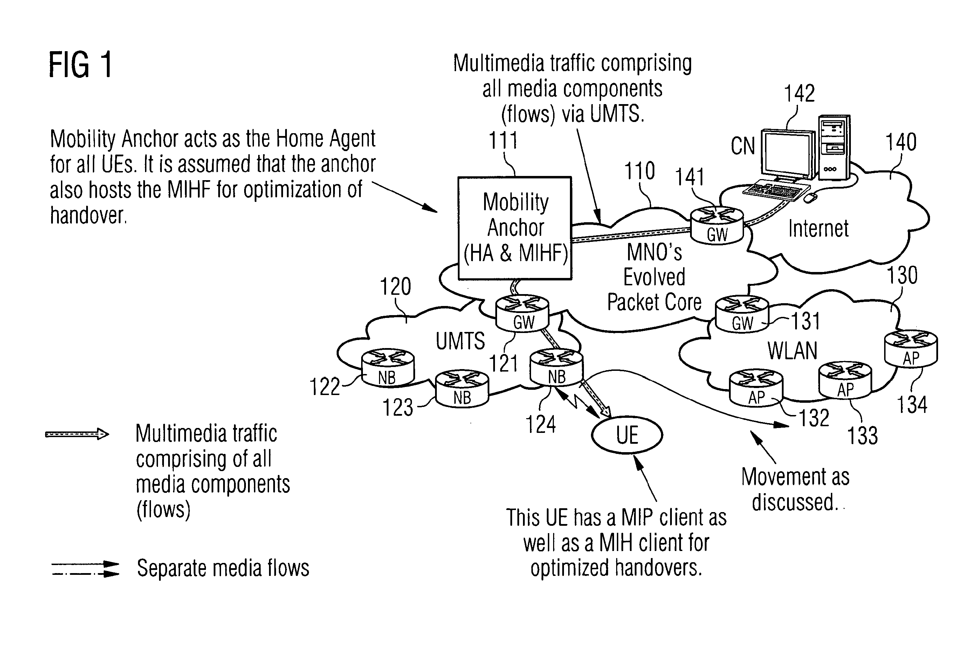

**Fig.1** shows a Mobile Network Operator's Evolved Packet Core network 110 comprising a Mobility Anchor 111 (with a home agent HA and a Media Independent Handover Function MIHF). The network 110 is connected via a gateway 121 to a UMTS network 120, via a gateway 131 to a WLAN 130 and via a gateway 141 to the Internet 140.

The WLAN 130 comprises several access points AP 132, 133 and 134. The UMTS network 120 comprises several base stations (Node B, "NB") 122, 123 and 124, a user equipment UE is connected to the Node B 124.

Multimedia traffic (e.g., video conferencing data) is conveyed from a Correspondent Node CN 142 within the Internet 140 via the gateway 141, the network 110, the mobility anchor 111, the gateway 121, Node B 124 to the user equipment UE thereby utilizing the UMTS protocol.

A Media Independent Handover (MIH) client preferably resides on the user equipment UE.

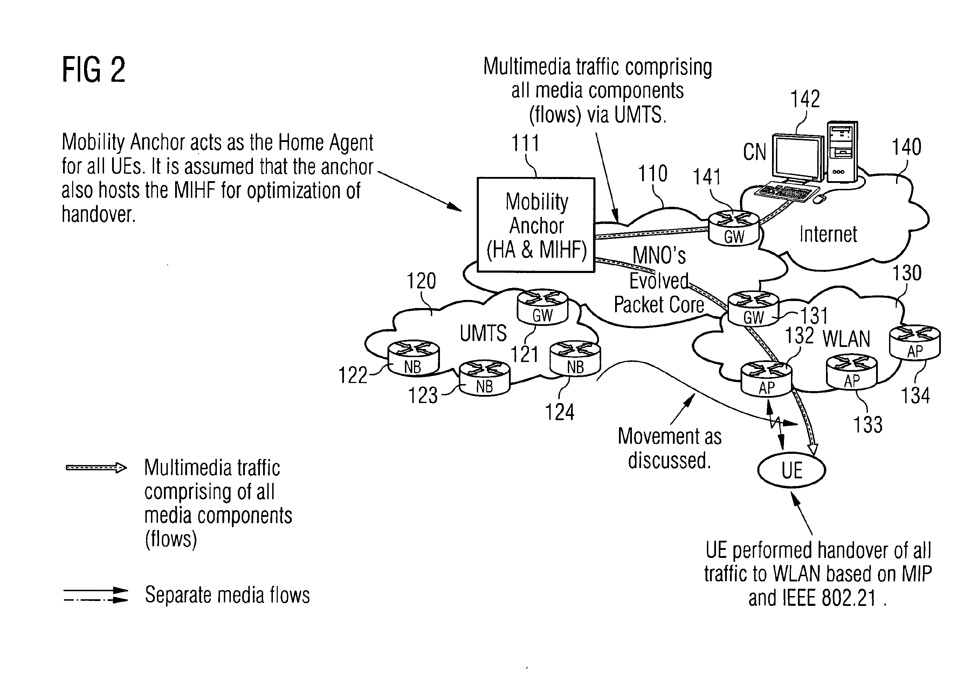

In **Fig.2** it is shown that the user equipment UE moves in the coverage area of the WLAN 130. According to Mobile IP optimized by IEEE 802.21 the complete multimedia traffic (containing both flows voice and video) is switched to the WLAN 130.

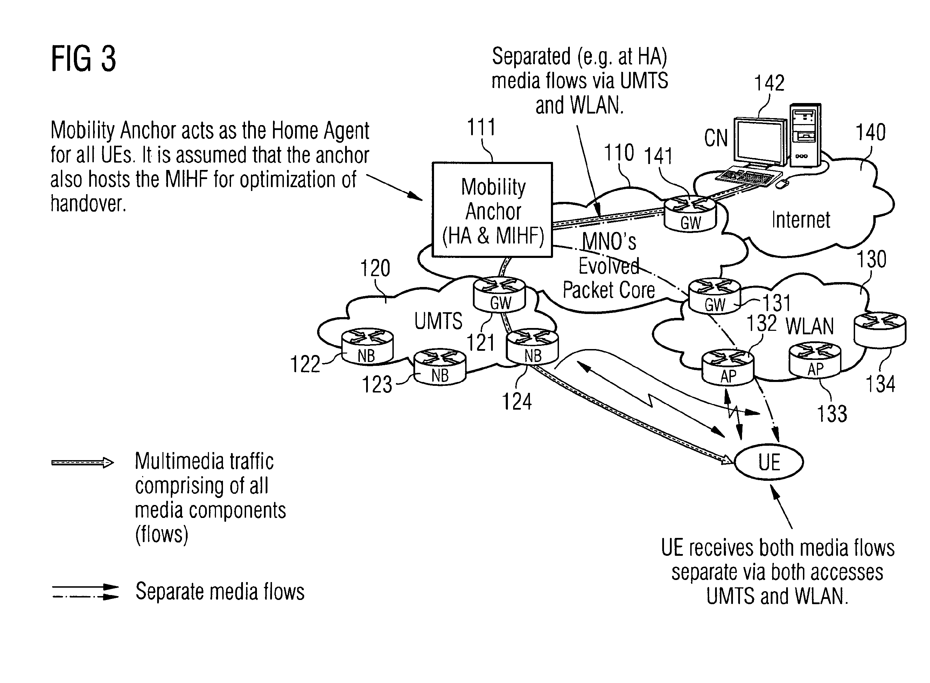

According to **Fig.3** the media flows received at the user equipment UE are separated, i.e. a portion of the data received at the user equipment is conveyed via WLAN, another (e.g., the remaining) portion of the data is conveyed via UTMS.

Preferably, an interworking between flow management (FM) and mobility (MM) management is to be provided to achieve the partial redirection of the data. In particular, the approach set forth in document IEEE 802.21 could be extended to support that FM/MM control logic as MIH User in general and especially also in a network controlled deployment.

A process could encompass the following steps, using an extended Media Independent Handover (MIH) protocol (based on the example as shown in Fig.3):
a) An integrated MM/FM logic of the network obtains link layer information from the UE via the MIH protocol thereby indicating the newly available WLAN access;
b) MM/FM logic decides whether FM has to be applied;
c) In case of "No", the MM logic decides to handover the complete traffic and initiates the handover via standard MIH protocol means, or
d) In case of "Yes", the FM logic decides to handover the relevant (media) flows and initiates the flow redirection through the proposed extended MIH means;
   As result of the "No" case, the decision can be executed, e.g., by standard Mobile IP mechanisms and the result may be similar to the example shown in Fig.2, whereas in the "Yes" case, the decision can be executed, e.g., by means of Monami6 extensions of Mobile IP and the outcome may basically look like Fig.3.

This process will be described in detail below referring to message flows using the proposed new MIH messages.

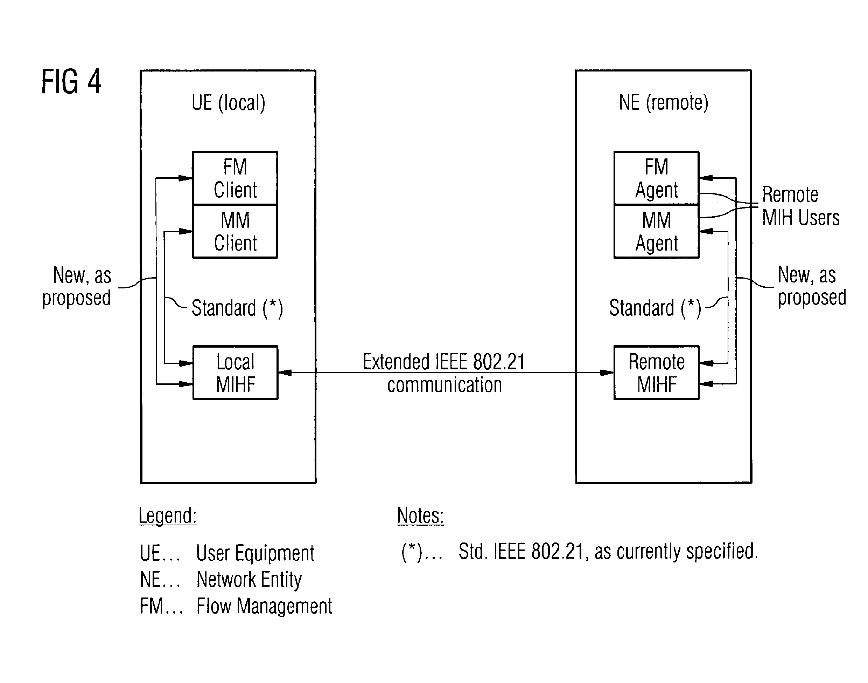

**Fig.4** shows a brief summary as how to extend the MIH framework by including flow management (FM) aspects that are supported by the specification of two dedicated messages "MIH FM Register" and "MIH FM Rules" that can be used to register (authorize) additional network interfaces for FM purposes and to convey the related FM rules.

IEEE 802.21 may be utilized for this purpose.

In a network controlled deployment according to Fig.4, the FM control logic resides in the network, hence the FM Agent as a MIH User is hosted by a network entity (NE) and the proposed, extended MIH protocol can be used for communication between network and terminal.

The Media Independent Handover Function (MIHF) provides Media Independent Event Service (MIES), Media Independent Command Service (MICS) and Media Independent Information Service (MIIS), which optimize handovers across heterogeneous networks.

Prior to providing MIES, MICS and MIIS to its users (so-called MIH Users), MIH entities need to be set up properly via System Management primitives and messages.

The extension to IEEE 802.21 as provided herein do not affect the services MIES and MIIS since the management of links, i.e., the network point of attachment, or, e.g., information about network infrastructure may remain the basis for both mobility management (MM) as well as flow management (FM).

It is suggested herewith to extend MICS with two additional MIH commands
- "MIH FM Register"; and
- "MIH FM Rules".

It is also proposed to extend System Management primitives and messages to cope with the proposed flow management capability of the extended MIH protocol.

This basically means that the command list has to be extended with the new, proposed commands (extension to IEEE 802.21, chapter 8.4.1.2).

The proposed, new MIH commands are:

| **No** | **MIH Command** | **(L)ocal, (R)emote** | **Remote Di- rection** | **Comments** |
|---|---|---|---|---|
| 10 | MIH FM Register | L, R | Client **→** Network **→** Client | Network or client may authorize additional network interfaces for purpose of flow management. |
| 11 | MIH FM Rules | L, R | Client **→** Network **→** Client | Network or client may convey flow management rules for already authorized network interfaces. |

These commands refer to the media independent Service Access Point (SAP) "MIH_SAP" that defines the interface between MIHF and MIH Users.

As an alternative to the embodiment presented herewith, both MIH commands could be merged into a single one. Hence, it is also applicable to defined one MIH command instead of two as shown in this example.

In the following, two messages are specified to make the overall process transparent.

The proposed, new primitives, defined as part of (extended) MIH_SAP, are:

| **No** | **Primitive** | **Service Category** | **Description** |
|---|---|---|---|
| 23 | MIH FM Register | Command | Network or client may authorize additional network interfaces for the purpose of flow management. |
| 24 | MIH FM Rules | Command | Network or client may convey flow management rules for already authorized network interfaces. |

The proposed primitives are specified below.

### MIH FM Register

```
 MIH_FM_Register.request
   Function:
        This primitive is used by MIH User on network or
        client side to authorize additional network inter-
        faces for purpose of flow management.
   Semantics of service primitive:
        MIH_FM_Register.request (
             SourceIdentifier,
             DestinationIdentifier,
            AdditionalLinkIdentifier
             LinkPriority
        )
```

| **Name** | **Type** | **Valid Range** | **Description** |
|---|---|---|---|
| Source Identifier | Identifier | Any valid individual or group identifier | The identifier of entity where the re-quest is initiated. |
| Destination Identifier | Identifier | Valid MIHF identifier | The destination identifier of request or response. This is the identifier of local or peer MIHF. |
| Additional Link Identifier | Identifier | N/A | Identifier of additional link. |
| Link Priority | INTEGER | 0-255 | Used to uniquely identify the priority for the link. |

When generated
   This primitive is generated by MIH Users on network or client side that may want to authorize additional network interfaces for purpose of flow management.
Effect on receipt
   MIHF capable entities may respond with
   MIH_FM_Register.confirm primitive.

```
 MIH_FM_Register.confirm
   Function:
        This primitive is used by MIHF to convey the out-
        come of authorization request for an additional
        network interface.
   Semantics of service primitive
        MIH_FM_Register.confirm (
             SourceIdentifier,
             DestinationIdentifier,
             FMRegisterResultCode
        )
```

| **Name** | **Type** | **Valid Range** | **Description** |
|---|---|---|---|
| Source Identifier | Identifier | Any valid individual or group identifier | The identifier of entity where the request is initiated. |
| Destination Identifier | Identifier | Valid MIHF identifier | The destination identifier of request or response. This is the identifier of local or peer MIHF. |
| FM Register Result Code | Enumerate | Success; Failure; Rejected | Result of trying to authorize an additional link. |

When generated
   This primitive is generated when
   MIH_FM_Register.request primitive is received by MIHF.
Effect on receipt
   Upon reception of this primitive the receiving entity becomes aware of the result for its request;
   "Rejected' could mean that it was the first and not an additional network interface, hence, flow management could not be applicable.

### MIH FM Rules

```
 MIH_FM_Rules.request
   Function:
        This primitive is used by MIH User on network or
        client side to convey flow management rules for al-
        ready authorized network interfaces.
   Semantics of service primitive
        MIH_Go_Online.request (
             SourceIdentifier,
             DestinationIdentifier,
             AuthorizedLinkIdentifier,
             FMRulesIdentifier,
             FMRules,
             FMRulesPriority
        )
```

| **Name** | **Type** | **Valid Range** | **Description** |
|---|---|---|---|
| Source Identifier | Identifier | Any valid individual or group identifier | The identifier of entity where the request is initiated. |
| Destination Identifier | Identifier | Valid MIHF identifier | The destination identifier of request or response. This is the identifier of local or peer MIHF. |
| Authorized Link Identifier | Identifier | N/A | Identifier of already authorized link. |
| FM Rules Identifier | INTEGER | 0-65535 | Identifier of FM rules. |
| FM Rules | Enumerated | N/A | The conveyed FM rules that depend on used classes Class A 'Base rules' (like Destination Addresses/ Address Ranges) or Class B 'Interpreted rules' (like H323 Video). |
| FM Rules Priority | INTEGER | 0-255 | Used to uniquely identify the priority for FM rules. |

When generated
   This primitive is generated by MIH Users on network or client side that may want to convey flow management rules for already authorized network interfaces.
Effect on receipt
   MIHF capable entities may respond with
   MIH_FM_Rules.confirm primitive.

```
 MIH_FM_Rules.confirm
   Function:
        This primitive is used by MIHF to convey the out-
        come of the request for conveying FM rules for an
        already authorized network interface.
   Semantics of service primitive
        MIH_FM_Rules.confirm (
             SourceIdentifier,
             DestinationIdentifier,
             FMRulesResultCode
        )
```

| **Name** | **Type** | **Valid Range** | **Description** |
|---|---|---|---|
| Source Identifier | Identifier | Any valid individual or group identifier | The identifier of entity where the request is initiated. |
| Destination Identifier | Identifier | Valid MIHF identifier | The destination identifier of request or response. This is the identifier of local or peer MIHF. |
| FM Rules Result Code | Enumerate | Success; Failure; Rejected | Result of trying to convey FM rules. |

When generated
   This primitive is generated when
   MIH_FM_Rules.request primitive is received by MIHF.
Effect on receipt
   Upon reception of this primitive the receiving entity becomes aware of the result for its request;
   'Rejected' could mean that the "authorized link" is not known.

### Proposed, new messages for command service category

The MIHF payload for proposed, new messages in this service category is described below.

### MIH_FM_Register Request

This message is used by MIH User on network or client side to authorize additional network interfaces for purpose of flow management.

| **Name** | **Type** |
|---|---|
| AdditonalLinkIdentifier | Link Identifier (248) |
| LinkPriority | Unique Identifier 2 (26) |

The type value "248" as specified for Common Type Length Value (TLV) encodings.

### MIH_FM_Register Response

This message is used by MIHF to convey the outcome of authorization request for an additional network interface.

| **Name** | **Type** |
|---|---|
| FMRegisterResultCode | Status (245) |

The type value "245" as specified for Common TLV encodings.

### MIH_FM_Rules Request

This message is used by MIH User on network or client side to resume MIH communication.

| **Name** | **Type** |
|---|---|
| AuthorizedLinkIdentifier | Link Identifier (248) |
| FMRulesIdentifier | Unique Identifier (5) |
| FMRules | FM Rules (27) |
| FMRulesPriority | Unique Identifier 2 (26) |

The type values "248" as specified for Common TLV encodings and "5" as specified for Other TLV encodings.

### MIH_FM_Rules Response

This message is used by MIHF to acknowledge (success or failure) the end of suspension.

| **Name** | **Type** |
|---|---|
| FMRulesResultCode | Status (245) |

The type value '245' as specified for Common TLV encodings.

### Extended Other TLV Encodings

A new, as proposed other TLV field and its associated Type code is presented in the following table:

| **Type** | **Parameter Name** |
|---|---|
| 26 | Unique Identifier 2 |
| 27 | FM Rules |

### Unique Identifier 2

This parameter specifies a unique identifier.

| **Type** | **Length** | **Value** |
|---|---|---|
| 26 | 1 | Unique Integer Identifier |

### FM Rules

This parameter specifies the conveyed FM rules.

| **Type** | **Length** | **Value** | |
|---|---|---|---|
| 27 | Variable | Conveyed FM rules. The length of the rules may depend on used classes for FM rules: | |
| | | Class A: Base rules | |
| | | | • Destination Addresses/Address Ranges |
| | | | • Source Addresses/Address Ranges |
| | | | • Destination Port/Port ranges |
| | | | • Source Port/Port ranges |
| | | | • Protocol |
| | | | • Traffic Class |
| | | | • Flow Label |
| | | | • Next Header Type (e.g., 6 Transmission Control Protocol) (Note 1) |
| | | | • Free form |
| | | | |
| | | Class B: Interpreted rules | |
| | | | • H323 Video |
| | | | • H323 Audio |
| | | | • RTP Video |
| | | | • RTP Audio |
| | | | • SMTP |
| | | | • POP |
| | | | • NSIS Signaling |
| | | | • SSH |

It is to be noted that the "next header" refers to the different headers carried by an IPv6 packet. The contents of these next headers may also be used to identify data flows uniquely for the purpose of flow management.

### Example: For a TCP stream, a flow identification may be:

IP Header Protocol = TCP and Next Header (which is TCP) Destination Port Number = 22.

It is further noted that in a 3GPP deployment the conveyed FM rules may be based on information derived from the Flow Description AVP that is used to describe a single IP flow.

### Advantages

Benefits described herein are in particular set forth from the perspective of the different roles during a communication with a focus on mobile network operators' (MNOs') benefits:
- Efficient usage of (radio) network resources and seamless continuity of connectivity and services;
- Enabling of new, innovative business opportunities by introducing additional flexibility in utilization of installed and future network infrastructure;
- MNO will decrease OPEX (operational expenditure);
- MNO will increase ARPU (average revenue per user);
- Save MNO's investments.

More specifically, benefits of flow management for network operators as well as the users are:
- aggregating available bandwidth;
- increasing the efficient use of bandwidth;
- enhancing security;
- enhancing reliability;
- enhancing value addition of service provider.

Benefits for network operators using the proposed extended MIH protocol as single protocol for integrated FM and MM are in particular:
- reducing implementation efforts;
- increasing processing efficiency;
- enhancing reliability.

### Example

Herein, use cases of the extended MIH protocol are described. As already mentioned above, two distinct messages are defined for enabling the additional functionality. However, as an alternative, it is possible to merge them those two messages into a single one.

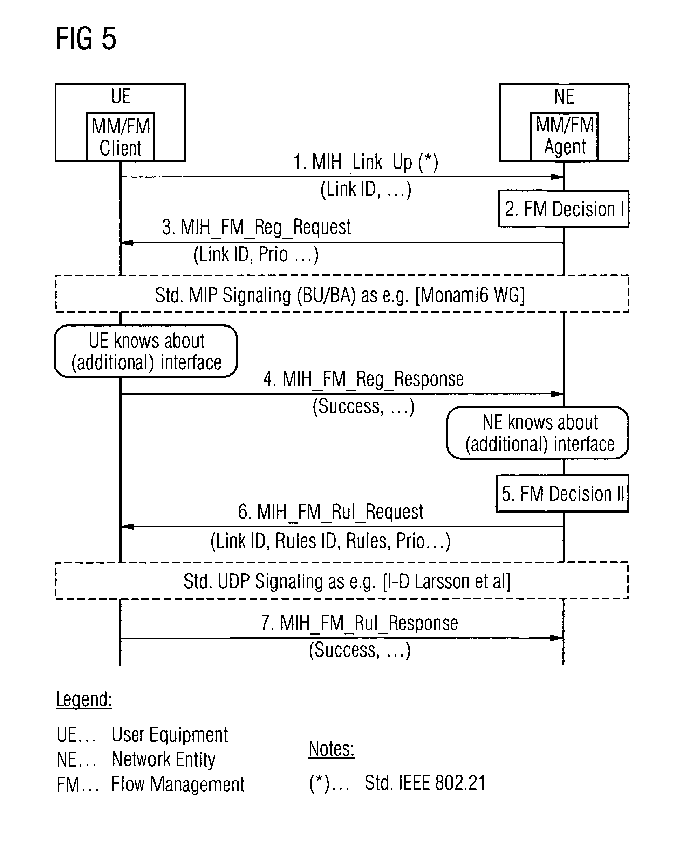

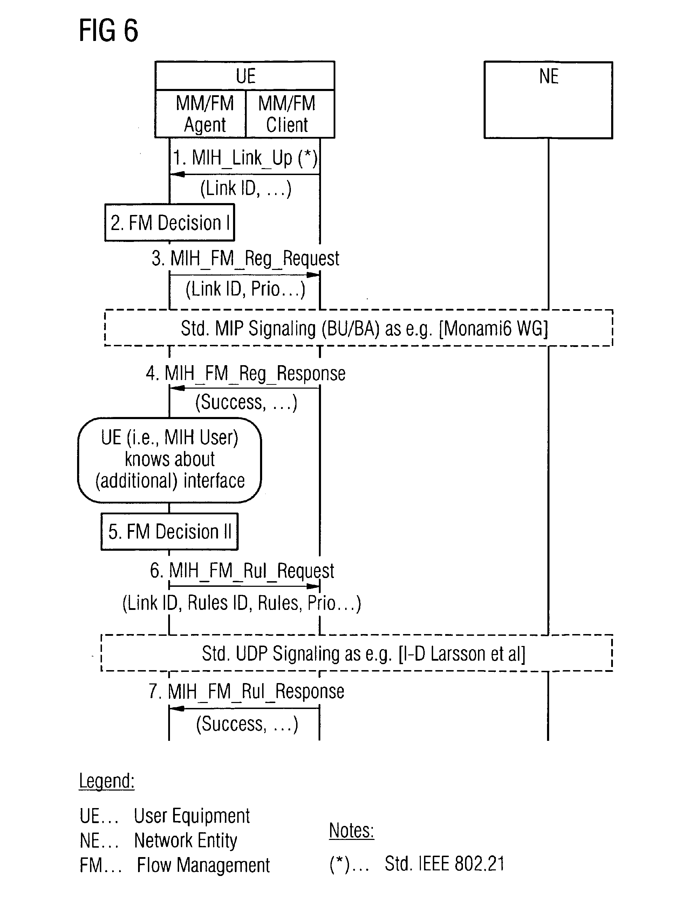

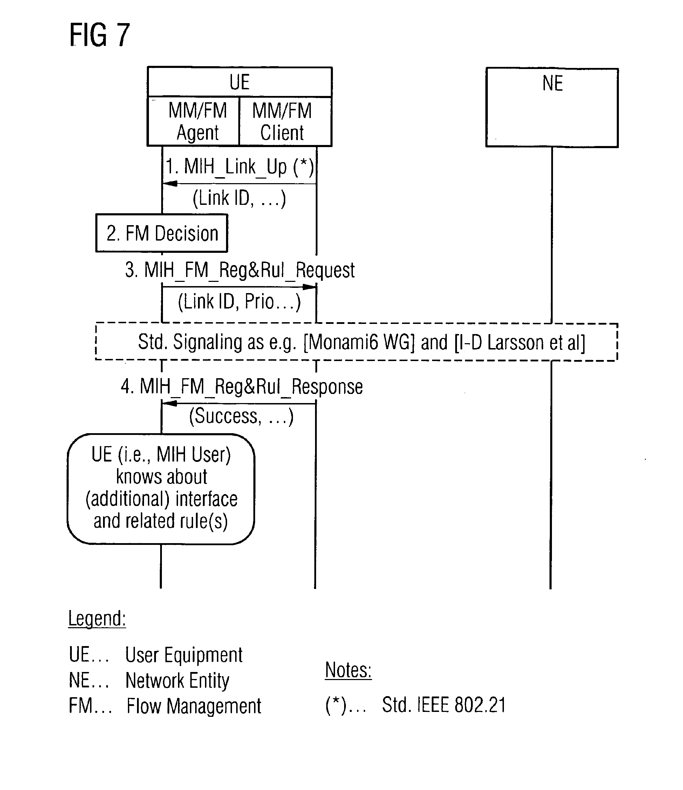

In the following, two applications (see Fig.5 and Fig.6) of the two proposed messages are used to make the overall process as transparent as possible, while in Fig.7 the alternative of a merged message is indicated.

**Fig.5** shows a message flow diagram between a user equipment UE and a network entity NE. Fig.5 depicts the application of the proposed, extended MIH protocol in a 3GPP environment, basically meaning that the FM control logic (i.e., the FM Agent) is hosted in a network entity (NE), and hence, ensuring network control over the overall optimized FM/MM process by using the proposed MIH messages.

The following steps refer to the steps also indicated in Fig.5:
1. The integrated MM/FM logic (MM/FM Agent) in the network entity obtains a link layer information "MIH_Link_Up" from the user equipment UE via the extended MIH protocol thereby indicating the newly available WLAN access ("Link ID" may in such case be "SSID+BSSID").
2. MM logic requests FM logic whether FM has to be applied (see "FM decision I" in Fig.5).
3. Depending on the outcome of "FM decision I" the following steps will be processed:
   a. If the result is "No", the MM logic decides to handover all traffic and initiates the handover via standard MIH protocol means (not depicted in Fig.5).
   b. If the result is "Yes", the FM logic decides to switch the relevant (e.g., media) flow(s) and to initiate the flow re-direction via the MIH message "MIH_FM_Register_Request" as suggested herewith.
   The user equipment UE starts registering the additional interface at its Home Agent HA using, e.g., extended MIP signaling in combination with IETF Monami6. In case of successful registration, the user equipment UE is aware of the additional interface (access network).
4. The successful registration is acknowledged. Thus, the network entity NE is aware of this additional interface (access network).
5. The FM control logic decides about the corresponding filter (flow) rules (see "FM decision II"). Such filter rules may consider the requirement of high bandwidth for certain kinds of data, e.g., to convey video streaming data via WLAN whereas voice could still be conveyed via low bandwidth access networks.
6. The FM rules are conveyed to the UE so that the UE could start to associate such rules with the interface.
   In a 3GPP deployment, the conveyed FM rules may base on information derived from the Flow Description AVP that is used to describe a single IP flow (refer to 3GPP TS 29.214 V7.0.0, chapter 5.3.8).
7. The successful outcome is acknowledged to the network entity NE.

**Fig.6** depicts the application of the proposed, extended MIH protocol in an IETF environment, basically meaning that the FM control logic (i.e., the FM Agent) is hosted also in the terminal (User Equipment UE), and hence, following IETF mind-set of terminal control over an optimized FM/MM process by using the extended MIH protocol now within the UE.

The message flow shown in Fig.6 basically corresponds to that as described for the 3GPP environment with regard to Fig.5.

**Fig.7** depicts the application of a potential merged message as a realization alternative. The potential merged message may be "MIH_FM_Register&Rules".

The message flow shown in Fig.7 basically corresponds to that as described for the 3GPP environment with regard to Fig.5.

### List of Abbreviations (in alphabetical order):

- AP: Access Point
- ARPU: Average Revenue Per User
- AVP: Attribute-Value Pair
- CN: Correspondent Node
- FM: Flow Management
- GW: Gateway
- HA: Home Agent
- IP: Internet Protocol
- LTE: Long Term Evolution
- MICS: Media Independent Command Service
- MIES: Media Independent Event Service
- MIH: Media Independent Handover
- MIHF: Media Independent Handover Function
- MIIS: Media Independent Information Service
- MIP: mobile IP
- MM: Mobility Management
- MNO: Mobile Network Operator
- NB: Node B (Base Station in UMTS)
- NE: Network Entity
- OPEX: Operational Expenditure
- PoA: Point of Attachment
- SAE: Systems Architecture Evolution
- SAP: Service Access Point
- UE: User Equipment
- WLAN: Wireless Area Network

## Claims

1. A method for flow management comprising the following steps:
- a network element receives data via at least one access network;
- the network element moves to the area of a further access network;
- a handover is performed providing a portion of data to the network element through the further access network, wherein another portion of data is still received via the at least one access network.

2. The method according to claim 1, wherein the network element is a mobile network element, in particular a user equipment (UE).

3. The method according to any of the preceding claims, wherein the handover is initiated by the network element.

4. The method according to any of the preceding claims, wherein the flow management is associate with a 3GPP network.

5. The method according to any of the preceding claims, wherein the at least one access network and/or the further access network is/are of the following type:
- a 3GPP access network;
- a non-3GPP access network, in particular a WLAN.

6. The method according to any of the preceding claims, wherein the data is distributed among the at least one access network and the further access network.

7. The method according to any of the preceding claims, wherein the data is distributed among the at least one access network and the further access network according to preferences that are in particular set forth by a user and/or by an operator.

8. The method according to any of the preceding claims, wherein a Media Independent Command Service is extended by at least one media independent handover command.

9. The method according to any of the preceding claims, wherein the network element is extended by a mobility management and flow management client.

10. A device for flow management comprising a processor unit that is arranged such that the method according of any of the preceding claims is executable on said processor.

11. The device according to claim 10, wherein said device is a communication device, in particular a network element.

12. The device according to any of claims 10 or 11, wherein the device is a mobile network element, in particular a user equipment.

13. The device according to claim 12, wherein the mobile network element comprises a flow manager.

14. Communication system comprising the device according to any of claims 10 to 13.
